# EUROPEAN PATENT APPLICATION

(11) **EP 4 779 758 A1**
(43) Date of publication of application: **22.07.2026**
(21) Application number: 25227019.4
(22) Date of filing: 23.12.2025
(51) Int. Cl.: H01M 10/613, H01M 10/617, H01M 10/6568, H01M 50/204

(54) **IMMERSION COOLING MODULE, COOLING METHOD AND USE OF SAID IMMERSION COOLING MODULE**

(30) Priority: 06.01.2025 KR 20250001759
(71) Applicant: SK Innovation Co., Ltd., Seoul 03188 (KR); SK On Co., Ltd., Seoul 03161 (KR)
(72) Inventor: JUNG, In Sik, 34124 Daejeon (KR); MIN, Gi Hong, 34124 Daejeon (KR)
(74) Representative: Prüfer & Partner mbB Patentanwälte · Rechtsanwälte

(57) **Abstract**

Disclosed is an immersion cooling module and an immersion cooling method. The immersion cooling module includes a housing (10) configured to contain a cooling fluid at a predetermined level and to accommodate one or more battery cells (20) that are disposed to be at least partially immersed in the cooling fluid. The housing (10) has a first end inlet (11) and a second end inlet (12) at opposite sides, respectively. The module further includes: a connection pipe (30) separately coupled below the housing (10), extending from the first end inlet (11) to the second end inlet (12), a connection conduit (41, 42, 43, 44) formed on a lower surface of the housing (10) for each of cooling spaces (L1, L2, L3, L4), with the spaces (L1, L2, L3, L4) being divided by the battery cell(s), so that the cooling fluid is flowable between the spaces and the connection pipe (30); a heat exchanger (50) coupled to the connection pipe (30) and having a cooling fluid outlet formed therein, and a fluid pump (61, 62) coupled to the connection pipe (30) and configured to control a flow direction of the cooling fluid toward the first side and the second side of the heat exchanger (50).

## Description

### BACKGROUND

### Technical Field

The present disclosure relates to an immersion cooling module. The present disclosure further relates to a cooling method and to a use of said immersion cooling module.

### Description of the Related Art

In recent years, as mobile devices such as mobile phones and laptops have become smaller and lighter, and electric vehicles and hybrid vehicles demand high-capacity power sources, a variety of batteries are being developed and used.

In the case of secondary batteries, efficiency is becoming increasingly important depending on the application field, but problems such as heat generation and fires during charging or operation occur due to the external factors.

Accordingly, technologies are being developed to increase the operating efficiency of secondary batteries and ensure safety. Moreover, a recent surge in electricity usage has led to increased carbon emissions and exacerbated global warming concerns, which has called for more efficient device operation mechanisms, and improved cooling methods and maximization of cooling efficiency therefor.

### Document of Related Art

(Patent Document 1) Korean Patent No. 10-2560884

### SUMMARY

According to an aspect of the present disclosure, provided is an immersion cooling module that maximizes battery cell cooling efficiency by optimizing the performance of the entire cooling fluid contained within a housing, wherein the cooling efficiency of a cooling fluid in each cooling space is enhanced according to the spatial arrangement of battery cells.

In addition, provided is an immersion cooling module that increases cooling efficiency by cooling battery cells through the vaporization of a cooling fluid within a sealed housing, wherein the gas (vapor) is collected, condensed into liquid form, and recirculated to continuously cool the battery cells.

In order to achieve the above objectives, according to a general aspect of the present disclosure, there is provided an immersion cooling module including: a housing configured to contain a cooling fluid at a predetermined level and to accommodate one or more battery cells that are disposed to be at least partially immersed in the cooling fluid. The housing includes a first end inlet and a second end inlet at opposite sides of the housing, respectively. Furthermore, the immersion cooling module comprises: a connection pipe which is separately coupled below the housing, extending from the first end inlet to the second end inlet; a connection conduit formed on a lower surface of the housing for each of cooling spaces, with the spaces being divided by the battery cell(s), so that the cooling fluid is flowable between the spaces and the connection pipe; a heat exchanger coupled to the connection pipe and having a cooling fluid outlet formed therein; and a fluid pump coupled to the connection pipe and connected to each of a first side and a second side of the heat exchanger, the fluid pump being configured to control a flow direction of the cooling fluid toward the first side and the second side of the heat exchanger.

According to this general aspect of the present disclosure, there is likewise provided an immersion cooling system comprising the above-described immersion cooling module as well as the at least one battery cells being immersed in the cooling fluid.

In an embodiment, the fluid pump may include: a first fluid pump coupled to the connection pipe on the first side of the heat exchanger; and a second fluid pump coupled to the connection pipe on the second side of the heat exchanger.

In an embodiment, the heat exchanger may include: a temperature sensor configured to measure a temperature of the cooling fluid inside the heat exchanger; and/or a discharge pump configured to control an amount of the cooling fluid exiting the outlet according to the temperature measured by the temperature sensor.

In an embodiment, the connection conduit may include a damper configured to regulate an inflow and outflow of the cooling fluid between individual cooling spaces divided by the battery cell(s) and the connection pipe. The damper may optionally comprise an adjustment member. The optional adjustment member may control or block the inlet of the connection conduit to respectively adjust or prevent a cooling fluid inside the connection pipe from flowing into the cooling space through the connection conduit.

In an embodiment, the module may further include a porous moisture absorption member. Preferably, the porous moisture absorption member is arranged to be bonded to a surface of each of the battery cells that is, at least partially, in contact with the cooling fluid.

In an embodiment, the porous moisture absorption member may have one or more through-holes.

In an embodiment, a plurality of through-holes may be provided. Preferably, the through-holes comprise three-dimensional void spaces having a spherical or polygonal shape and/or cross-section. Further preferably, the through-holes comprise cylindrical pores, flask-shaped pores and/or open pores having a conical or V shaped pore structure.

In an embodiment, the module may further comprise a condenser that is coupled to a pipe connected to an outside of the housing so that gas is flowable to and from a first side and a second side of an upper space inside the housing.

In an embodiment, the heat exchanger is configured such that a cooling fluid entering the heat exchanger is mixed and undergoes heat exchange.

In another general aspect of the present disclosure, an immersion cooling method may be provided that comprises: i) providing a housing which includes a first end inlet and a second end inlet provided on opposite ends of the housing, and providing a connection pipe that is arranged to be coupled below the housing; ii) placing one or more battery cells in the housing; iii) introducing a cooling fluid into the housing through the first end inlet and/or the second end inlet, so that a certain level of the cooling fluid inside the housing is reached and/or maintained, and allowing the cooling fluid to flow from and into the housing through the connection pipe. The battery cell(s) is/are at least partially immersed in the cooling fluid and arranged to form one or more cooling spaces between the battery cells, and the cooling fluid accommodated in the connection pipe may be allowed to be introduced into a heat exchanger that is arranged to be coupled to the connection pipe.

In an embodiment, one or more connection conduit(s) may be provided to connect the connection pipe from a lower surface of the housing with the one or more cooling space(s), respectively. A flow of the cooling fluid may allow the cooling fluids to exchange heat with each other via the heat exchanger, and the cooling fluid may be allowed to flow between the cooling space(s) and the connection pipe.

In an embodiment, a first connection conduit may be provided to connect the connection pipe from a lower surface of the housing on the first end inlet side with a first cooling space, a second connection conduit and a third connection conduit may further be provided that may be individually coupled to the connection pipe from the lower surface of the housing for a second cooling space and a third cooling space created between the battery cells, respectively, and a fourth connection conduit may be provided to connect the connection pipe from the lower surface of the housing with a fourth cooling space. Preferably, a flow of the cooling fluid flowing in from the first end inlet and the second end inlet into the connection pipe is respectively controlled by the first connection conduit and the fourth connection conduit.

In an embodiment, when the temperature of the cooling fluid in one or more cooling space(s) increases - optionally increases rapidly -, the cooling fluid may be discharged to the connection pipe through the corresponding connection conduits connected to the respective cooling space(s), and may be supplied toward the heat exchanger by means of a corresponding one or more fluid pump(s), respectively, so that a relatively low temperature cooling fluid fraction from one or more other cooling space(s) may be allowed to be introduced into the heat exchanger by means of the corresponding other fluid pump(s), respectively, to allow the cooling fluid fractions to exchange heat with each other through mixing in the heat exchanger.

In an embodiment, the method may further comprise: measuring, by a temperature sensor, a temperature of the cooling fluid inside the heat exchanger, and controlling, by a discharge pump, an outlet through which the cooling fluid can be discharged. Preferably, an amount of the cooling fluid exiting the outlet is controlled based on temperature information provided by the temperature sensor. Further preferably, the temperature sensor, the discharge pump, and the outlet may be arranged to be comprised in the heat exchanger.

In an embodiment, by sensing the temperature of the cooling fluid in each of the one or more cooling space(s), the cooling fluid fraction with the highest temperature may be discharged toward the heat exchanger, where the cooling fluid may be mixed with the cooling fluid fraction of a relatively lower temperature, so that the mixed cooling fluid may have a reduced temperature and may then be reintroduced into one or more of the cooling spaces through a circulation process.

In an embodiment, a damper may be provided that may be arranged to be connected to an intersection of the connection pipe and the connection conduit to regulate an amount and/or a direction of a flow of the cooling fluid by controlling an opening angle of an adjustment member that is configured to have the same shape as a cross-section of an inside of the connection conduit. Preferably, the damper may be configured to regulate a flow direction of the cooling fluid entering or leaving the heat exchanger as the one or more fluid pump(s) operate, so that the cooling fluid may be selectively supplied to or discharged from each of the one or more cooling space(s).

In a further general aspect, a use of an immersion cooling module may be provided for heat exchange of cooling fluid fractions by mixing cooling fluid fractions flowing in from opposite sides of a heat exchanger.

The features and advantages of the present disclosure will become more apparent from the following detailed description based on the accompanying drawings.

Prior to this, terms or words used in this specification and claims should not be construed in their usual, dictionary meaning, and should be interpreted with meaning and concept consistent with the technical idea of the present disclosure on the basis of the principle that the inventor can define terminology appropriately to explain his or her invention in the best way possible.

According to an embodiment of the present disclosure, by maintaining uniform cooling performance of a cooling fluid within the immersion cooling module, the stable operating performance of battery cells can be ensured.

Furthermore, by maximizing the cooling efficiency of a cooling fluid contained within the housing, the cooling performance of the cooling fluid can be fully utilized.

Furthermore, by increasing the cooling efficiency of battery cells or battery cell modules within the immersion cooling module, energy usage efficiency can be improved, thereby effectively reducing carbon emissions.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a schematic view of an immersion cooling module according to an embodiment of the present disclosure;
FIG. 2 is a schematic view of a modified example of an immersion cooling module according to an embodiment of the present disclosure;
FIG. 3 is a plan view of a porous moisture absorption member according to an embodiment of the present disclosure; and
FIG. 4 is a schematic view of the operation of a heat exchanger of an immersion cooling module according to still another embodiment of the present disclosure.

### DETAILED DESCRIPTION

Terms used to describe an embodiment of the present disclosure are not intended to limit the disclosure. It should be noted that singular expressions include plural expressions unless the context clearly dictates otherwise.

It should be noted that, in assigning reference numerals to components in the drawings, identical components are assigned the same reference numerals as much as possible even if they are shown in different drawings, and similar reference numbers are assigned to similar components.

The drawings may be schematic or exaggerated for the purpose of illustrating the embodiments. In this document, expressions such as "have", "may have", "include", or "may include" refer to the presence of the corresponding feature (e.g., a numerical value, function, operation, or component such as a part), and do not exclude the presence of additional features.

Terms such as "one", "other", "another", "first", "second", etc., are used to distinguish one component from another component, and the components are not limited by the terms.

Hereinafter, an embodiment of the present disclosure will be described in detail with reference to the attached drawings.

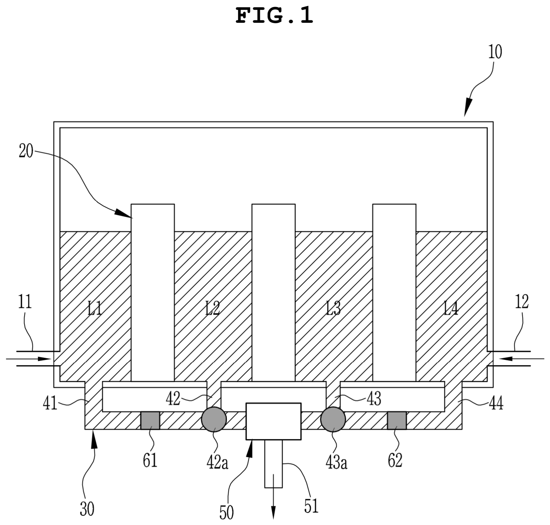

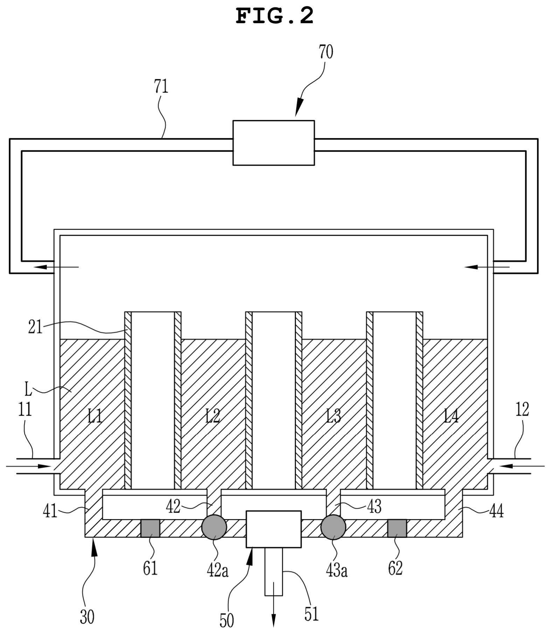

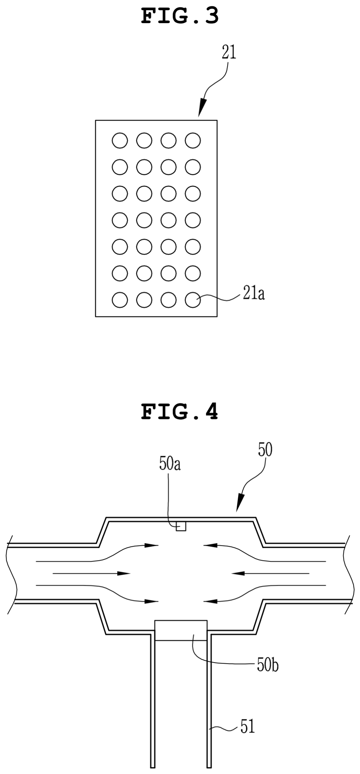

FIG. 1 is a schematic view of an immersion cooling module according to an embodiment of the present disclosure; FIG. 2 is a schematic view of a modified example of an immersion cooling module according to an embodiment of the present disclosure; FIG. 3 is a plan view of a porous moisture absorption member according to an embodiment of the present disclosure; and FIG. 4 is a schematic view of the operation of a heat exchanger of an immersion cooling module according to still another embodiment of the present disclosure.

An immersion cooling module according to an embodiment of the present disclosure may include: a housing 10 containing a cooling fluid at a predetermined level, and having a first end inlet 11 and a second end inlet 12 at opposite sides, respectively; at least one battery cell 20 immersed in the cooling fluid; a connection pipe 30 that is separately connected below the housing 10 from the first end inlet 11 to the second end inlet 12; a connection conduit formed on the lower surface of the housing 10 for each of cooling spaces, with the spaces being divided by the battery cell 20, so that the cooling fluid flows between the spaces and the connection pipe 30; a heat exchanger 50 coupled to the connection pipe 30 and having a cooling fluid outlet 51 formed therein; and fluid pumps coupled to the connection pipe 30 and respectively connected to one side and the other side of the heat exchanger 50 to control the flow direction of the cooling fluid toward one side and the other side of the heat exchanger 50.

In the immersion cooling module according to an embodiment of the present disclosure, when the cooling fluids are introduced into the housing 10 through the first end inlet 11 as well as the second end inlet 12 on opposite sides of the housing 10, the cooling fluids accommodated in the connection pipe 30 coupled below the housing 10 are mixed with each other through the heat exchanger 50, and then the mixed cooling fluid circulates throughout the entire interior of the housing 10, thereby maximizing the cooling performance of the cooling fluid. In addition to maximizing the cooling performance of the cooling fluid, in case that the cooling efficiency of the cooling fluid falls below a critical value, the existing cooling fluid may be discharged to the outside and new cooling fluid may be reintroduced through the first end inlet 11 and/or the second end inlet 12 on opposite sides of the housing 10.

As shown in FIG. 1, the housing 10 may accommodate a cooling fluid at a predetermined level. The cooling fluid may be contained in the housing 10 at a level that leaves a predetermined space in the upper portion of the interior of the housing 10. In addition, as shown in FIG. 2, the space inside the housing 10 may be formed such that a cooling gas is vaporized and filled in the upper space of the housing 10 interior during the process of the cooling fluid cooling the battery cells 20. Due to this, the gas filled in the upper space inside the housing 10 may be liquefied through an external condenser 70 and reintroduced into the housing 10.

The housing 10 accommodates a cooling fluid inside, and the first end inlet 11 and the second end inlet 12 may be formed at one end and the other end of the housing 10, respectively. Cooling fluid may be introduced from each end of the housing 10. For example, the same cooling fluid may be introduced from each end of the housing 10 via the first end inlet 11 and the second end inlet 12 at the same time. Alternatively, it may also be possible to introduce different cooling fluids having a different composition through the first and second end inlets 11, 12, respectively.

The battery cells 20 may be disposed inside the housing 10 so as to be at least partially immersed in a cooling fluid. As shown in FIG. 1, the battery cells 20 may be arranged at predetermined intervals, and the intervals may be formed as intervals between battery cells 20 or as intervals between battery cell 20 modules.

Below the housing 10, the connection pipe 30 may be provided to allow the cooling fluid contained within the housing 10 to flow outside the housing 10, while being separated from the interior of the housing 10. The two ends of the connection pipe 30 are connected in the direction of the first end inlet 11 side and the second end inlet 12 side of the housing 10, so that a cooling fluid flowing into the first end inlet 11 may flow directly into the connection pipe 30, or a cooling fluid flowing into the second end inlet 12 may flow directly into the connection pipe 30.

As the battery cells 20 or battery cell modules are arranged at a predetermined interval inside the housing 10, the connection conduit may be provided on the lower surface of the housing 10 for each cooling space so as to be connected to the connection pipe 30 to allow the cooling fluid inside the connection pipe 30 to flow into and out of the cooling space created by the battery cells 20 or battery cell modules being spaced apart.

The connection conduit may be coupled in a manner that allows a cooling fluid to flow through the connection pipe 30 and the cooling space inside the housing 10. Thereby, the cooling fluid flowing in the connection pipe 30 may flow into and out of the cooling space between the battery cells 20 or battery cell modules.

As shown in FIG. 1, a first connection conduit 41 connected to the connection pipe 30 from the lower surface of the housing 10 for a first cooling space L1 on the first end inlet 11 side, as well as a second connection conduit 42 and a third connection conduit 43 connected to the connection pipe 30 from the lower surface of the housing 10 for a second cooling space L2 and a third cooling space L3 created between the battery cells 20 may be individually coupled to be connected to the connection pipe 30. Finally, a fourth connection conduit 44 connected to the connection pipe 30 from the lower surface of the housing 10 for a fourth cooling space L4 created by the battery cell 20 and the inner surface of the housing 10 may be coupled.

The first cooling space L1, the second cooling space L2, the third cooling space L3, and the fourth cooling space L4 represent cooling spaces partitioned as examples in the present disclosure, and there is no limitation on the number of partitioned spaces, and at least one cooling space may be formed according to the arrangement of various battery cells 20 or battery cell modules. Each cooling space formed in this way and the connection pipe 30 may be mutually connected so that a cooling fluid can flow therebetween.

The heat exchanger 50 is connected to the connection pipe 30 and may maximize the cooling efficiency of the entire cooling fluid contained within the housing 10 via heat exchange between cooling fluids flowing through the connection pipe 30 on both sides of the heat exchanger 50.

The first end inlet 11 and the second end inlet 12 are respectively formed at one end and the other end in the housing 10, and the outlet 51 for discharging cooling fluid may be formed in the heat exchanger 50.

The temperature of the cooling fluids mixed through the heat exchanger 50 may be measured by means of a temperature sensor 50a, and in case that the temperature of the mixed cooling fluid exceeds a preset temperature during the mixing and redistribution process of the cooling fluid, the high temperature cooling fluid may be discharged and new cooling fluid may be introduced through the first end inlet 11 and the second side inlet 12 of the housing 10.

According to an embodiment of the present disclosure, in the process of cooling battery cells 20 with a cooling fluid contained within the housing 10, by alleviating differences in the temperature and cooling performance of the cooling fluid caused by variations in heat generation at different locations of the battery cells 20, the overall efficiency of battery cell cooling by the cooling fluid contained within the housing 10 may be increased.

The fluid pump is connected to the connection pipe 30 through which cooling fluid is introduced into the heat exchanger 50, and is coupled to one side and to the other side of the heat exchanger 50 so as to introduce cooling fluid into the heat exchanger 50 or to re-introduce cooling fluid cooled from the heat exchanger 50 into the housing 10 through the connection conduit.

As shown in FIG. 1, a first fluid pump 61 may be coupled to the connection pipe 30 on one side of the heat exchanger 50, and a second fluid pump 62 may be coupled to the connection pipe 30 on the other side of the heat exchanger 50. The number of fluid pumps and their installation arrangements may be adjusted and applied in various ways, taking into consideration the interior size of the housing 10, the amount of cooling fluid contained within the housing 10, etc.

As shown in FIG. 2, the immersion cooling module according to an embodiment of the present disclosure may include: a porous moisture absorption member 21 bonded to a surface of the battery cell 20 that is, at least partially, in contact with the cooling fluid; and the condenser 70 coupled to a pipe 71 connected to the outside of the housing 10 so that gas flows to and from one side and the other side of the upper space inside the housing 10.

The porous moisture absorption member 21 is impregnated with a cooling fluid to cool battery cells 20 and at the same time, cooling effect on battery cells 20 may be increased by the latent heat absorbed when promoting vaporization of the cooling fluid impregnated in the porous moisture absorption member 21 through the heat generation of battery cells 20. Preferably, the porous moisture absorption member 21 is at least partially impregnated with a cooling fluid so that at least part of the through-holes 21a included in the porous moisture absorption member 21 are filled with cooling fluid, and the cooling fluid is in contact with a surface of the battery cell(s) 20 or battery cell module(s) as well as a pore wall surface of the porous moisture absorption member 21.

In addition, the cooling fluid may be a liquid, and vaporization of the liquid cooling fluid may be induced by using the porous moisture absorption member 21, and the vaporized gas may be filled in a predetermined space in the upper portion of the interior of the housing 10.

When the vaporized cooling fluid is supplied to the upper space inside the housing 10, the gas (vapor) passes through the condenser 70 connected to the pipe 71 through the pipe 71 provided to allow gas to circulate to one side and the other side of the interior space of the housing 10, so that the liquefied cooling fluid is reintroduced into the housing 10.

As shown in FIG. 3, the porous moisture absorption member 21 may have one or more through-holes 21a so that cooling efficiency by a cooling fluid in direct contact with a battery cell 20 may be achieved, as well as cooling by the latent heat of vaporization of the cooling fluid impregnated in the porous moisture absorption member 21. For example, the through-holes 21a included in the porous moisture absorption member 21 may comprise three-dimensional void spaces (i.e. pores) having a spherical or polygonal shape and/or cross-section. Preferably, a plurality of through-holes 21a may be provided. Further preferably, the through holes 21 provided in plurality show a similar average pore diameter and/or morphology. For instance, a microporous structure may be provided, while a meso- and/or macroporous structure may also be provided. The through-holes 21a may form cylindrical pores, flask-shaped pores and/or open pores which may, for example, reveal a conical or V shaped pore structure.

As shown in FIG. 4, the heat exchanger 50 may include: the temperature sensor 50a that measures the temperature of a cooling fluid inside the heat exchanger 50; the outlet 51 through which a cooling fluid flows out; and a discharge pump 50b that controls the amount of the cooling fluid exiting the outlet 51 according to the temperature sensor 50a.

As previously described, heat exchange between cooling fluids may be achieved inside the heat exchanger 50 by mixing cooling fluids flowing in from opposite sides of the heat exchanger 50.

That is, as shown in FIG. 1, the temperature of each of the first cooling space L1, the second cooling space L2, the third cooling space L3, and the fourth cooling space L4 is measured by the temperature sensor (not shown), and the flow direction of a cooling fluid in the connection pipe 30 may be controlled according to the temperature difference.

For example, in case that the temperature of a cooling fluid in the third cooling space L3 becomes relatively higher than that in the other cooling spaces L1, L2, and L4 , the cooling fluid is discharged to the connection pipe 30 through the third connection conduit 43 and supplied toward the heat exchanger 50 by means of the second fluid pump 62, so that a relatively low temperature cooling fluid from the first cooling space L1 or the second cooling space L2 may be introduced into the heat exchanger 50 by means of the first fluid pump 61 to allow the cooling fluids to exchange heat with each other.

In this case, the cooling fluids are mixed within the heat exchanger 50 to allow a cooling fluid at a lower temperature to be reintroduced into the third cooling space L3.

Although the cooling temperature of a cooling fluid may be controlled by mixing cooling fluids inside the heat exchanger 50, if the temperature of the cooling fluid exceeds a preset temperature even after heat exchange between the cooling fluids, the cooling performance falls below the standard. Thus, the discharge pump 50b in the heat exchanger 50 is driven to discharge a certain amount of cooling fluid through the outlet 51.

In this case, when a certain amount of cooling fluid is discharged, by controlling the inflow of new cooling fluid introduced through the first end inlet 11 and the second end inlet 12 of the housing 10, the level of cooling fluid contained within the housing 10 may be appropriately maintained.

Accordingly, as shown in FIGS. 1 and 2, in order to allow a cooling fluid flowing from the connection pipe 30 to flow into each cooling space or to allow a cooling fluid from each cooling space to flow out into the connection pipe 30, dampers 42a and 43a that can control the flow direction of cooling fluid may be coupled to the first connection conduit 41, the second connection conduit 42, the third connection conduit 43, and the fourth connection conduit 44 formed on the lower surface of the housing 10 corresponding to the first cooling space L1, the second cooling space L2, the third cooling space L3 and the fourth cooling space L4.

The dampers 42a and 43a may control the inflow and outflow of cooling fluid between individual cooling spaces divided by the battery cells 20 and the connection pipe 30. In addition, the dampers 42a and 43a are coupled between the connection pipe 30 and the connection conduits to regulate and change the direction of the flow of a cooling fluid by opening and closing the connection conduits.

To be specific, the damper is connected to the intersection of the connection pipe 30 and the connection conduit to regulate the flow amount or flow direction of a cooling fluid by controlling the opening angle of an adjustment member (not shown) having the same shape as the cross-section of the inside of the pipe (conduit).

That is, the damper's adjustment member may control or block the inlet of the connection conduit to respectively adjust or prevent a cooling fluid inside the connection pipe from flowing into the cooling space through the connection conduit. In addition, by adjusting the forward inclination of the adjustment member, some of the cooling fluid inside the connection pipe may flow through the connection pipe, and the remaining part may flow into the cooling space through the connection conduit.

In this case, the adjustment member may be formed with an area corresponding to the internal cross-sectional area of the connection pipe 30, and may regulate the opening and closing of the passage or the amount of cooling fluid flowing into the cooling space by controlling the opening degree of the cross-section of the pipe or conduit through which the cooling fluid flows.

The damper may regulate the flow direction of a cooling fluid entering or leaving the heat exchanger 50 as the first fluid pump 61 and the second fluid pump 62 operate, thereby selectively supplying or discharging the required cooling fluid to each cooling space.

As described above, by sensing the temperature of a cooling fluid in each cooling space, the cooling fluid with the highest temperature is discharged toward the heat exchanger 50, where the cooling fluid is mixed with the cooling fluid of a relatively lower temperature. The mixed cooling fluid, having a reduced temperature, is then reintroduced into the cooling space through a circulation process, thereby maximizing the overall cooling efficiency by the entire cooling fluid contained within the housing 10.

As shown in FIGS. 1 and 2, since the first connection conduit 41 and the fourth connection conduit 44 may allow initial cooling fluids flowing in from the first end inlet 11 and the second end inlet 12 to flow into the connection pipe 30, the cooling performance of the entire cooling fluid inside the housing 10 may be maintained through heat exchange with cooling fluids in the remaining cooling spaces.

An immersion cooling method may comprise:
i) providing a housing 10, which includes a first end inlet 11 and a second end inlet 12 provided on opposite ends of the housing 10, and providing a connection pipe 30 that is arranged to be coupled below the housing 10;
ii) placing one or more battery cell(s) 20 in the housing 10;
iii) introducing a cooling fluid into the housing 10 through the first end inlet 11 and/or the second end inlet 12, so that a certain level of the cooling fluid inside the housing 10 is reached and/or maintained, and allowing the cooling fluid to flow from and into the housing 10 through the connection pipe 30. The battery cell(s) 20 may be at least partially immersed in the cooling fluid and arranged to form one or more cooling space(s) L1, L2, L3, L4 between the battery cells 20. The cooling fluid accommodated in the connection pipe 30 may be allowed to be introduced into a heat exchanger 50 that is arranged to be coupled to the connection pipe 30.

In an embodiment, one or more connection conduit(s) 41, 42, 43, 44) may be provided to connect the connection pipe 30 from a lower surface of the housing 10 with the one or more cooling space(s) L1, L2, L3, L4, respectively, wherein the flow of cooling fluid may allow the cooling fluids to exchange heat with each other via the heat exchanger 50, and/or the cooling fluid may be allowed to flow between the cooling space(s) L1, L2, L3, L4 and the connection pipe 30.

In an embodiment, a first connection conduit 41 may be provided to connect the connection pipe 30 from a lower surface of the housing 10 on the first end inlet 11 side with a first cooling space L1, a second connection conduit 42 and a third connection conduit 43 may further be provided that are individually coupled to the connection pipe 30 from the lower surface of the housing 10 for a second cooling space L2 and a third cooling space L3 created between the battery cells 20, respectively, and a fourth connection conduit 44 may be provided to connect the connection pipe 30 from the lower surface of the housing 10 with a fourth cooling space 44. Preferably, a flow of the cooling fluid flowing in from the first end inlet 11 and the second end inlet 12 into the connection pipe 30 is respectively controlled by the first connection conduit 41 and the fourth connection conduit 44.

In an embodiment, when the temperature of the cooling fluid in one or more cooling space(s) L2, L3 may increase rapidly, the cooling fluid may be discharged to the connection pipe 30 through the corresponding connection conduits 42, 43 connected to the respective cooling space(s) L2, L3, and supplied toward the heat exchanger 50 by means of a corresponding one or more fluid pump(s) 61, 62, respectively, so that a relatively low temperature cooling fluid fraction from one or more other cooling space(s) L1, L4 may be allowed to be introduced into the heat exchanger 50 by means of the corresponding other fluid pump(s) 61, 62, respectively, to allow the cooling fluid fractions to exchange heat with each other through mixing in the heat exchanger 50.

In an embodiment, the method may further comprise measuring, by a temperature sensor 50a, a temperature of the cooling fluid inside the heat exchanger 50, and/or controlling, by a discharge pump 50b, an outlet 51 through which the cooling fluid can be discharged. Preferably, an amount of the cooling fluid exiting the outlet 51 is controlled based on temperature information provided by the temperature sensor 50a. Further preferably, the temperature sensor 50a, the discharge pump 50b, and the outlet 51 are arranged to be comprised in the heat exchanger 50.

In an embodiment, by sensing a temperature of the cooling fluid in each of the one or more cooling spaces L1, L2, L3, L4, the cooling fluid fraction with the highest temperature may be discharged toward the heat exchanger 50, where the cooling fluid may be mixed with the cooling fluid fraction of a relatively lower temperature, so that the mixed cooling fluid may have a reduced temperature and/or may be then reintroduced into one or more of the cooling spaces L1, L2, L3, L4 through a circulation process.

In an embodiment, a damper 42a, 43a may be provided that may be arranged to be connected to an intersection of the connection pipe 30 and/or the connection conduit 42, 43 to regulate an amount and/or a direction of a flow of the cooling fluid by controlling an opening angle of an adjustment member that may be configured to have the same shape as a cross-section of an inside of the connection conduit 42, 43. Preferably, the damper 42a, 43a is configured to regulate a flow direction of the cooling fluid entering or leaving the heat exchanger 50 as the one or more fluid pump(s) 61, 62 operate, so that the cooling fluid may be selectively supplied to or discharged from each of the one or more cooling spaces L1, L2, L3, L4.

Besides, the above-described immersion cooling module may be used for heat exchange of cooling fluid fractions by mixing cooling fluid fractions flowing in from opposite sides of a heat exchanger 50.

Above, the present disclosure has been described in detail through specific embodiments. The embodiments are for specifically explaining the present disclosure, and are only illustrative and do not limit the scope of the appended claims. It is obvious to those skilled in the art that various changes and modifications to the embodiments are possible within the scope and technical idea of the present disclosure, and it is natural that such changes and modifications fall within the scope of the appended claims.

## Claims

1. An immersion cooling module comprising:
a housing (10) configured to contain a cooling fluid at a predetermined level and to accommodate one or more battery cells (20) that are disposed to be at least partially immersed in the cooling fluid, the housing (10) including a first end inlet (11) and a second end inlet (12) at opposite sides of the housing (10), respectively;
a connection pipe (30) separately coupled below the housing (10), extending from the first end inlet (11) to the second end inlet (12);
a connection conduit (41, 42, 43, 44) formed on a lower surface of the housing (10) for each of cooling spaces (L1, L2, L3, L4), with the spaces (L1, L2, L3, L4) being divided by the battery cell(s) (20) when accommodated in the housing, so that the cooling fluid is flowable between the spaces (L1, L2, L3, L4) and the connection pipe (30);
a heat exchanger (50) coupled to the connection pipe (30) and having a cooling fluid outlet (51) formed therein; and
a fluid pump (61, 62) coupled to the connection pipe (30) and connected to each of a first side and a second side of the heat exchanger (50), the fluid pump (61, 62) being configured to control a flow direction of the cooling fluid toward the first side and the second side of the heat exchanger (50).

2. The module of claim 1, wherein the fluid pump (61, 62) comprises:
a first fluid pump (61) coupled to the connection pipe (30) on the first side of the heat exchanger (50); and
a second fluid pump (62) coupled to the connection pipe (30) on the second side of the heat exchanger (50).

3. The module of claim 1 or 2, wherein the heat exchanger (50) further comprises:
a temperature sensor (50a) configured to measure a temperature of the cooling fluid inside the heat exchanger (50); and/or
a discharge pump (50b) configured to control an amount of the cooling fluid exiting the outlet (51) according to the temperature measured by the temperature sensor (50a).

4. The module of any one of claims 1 to 3, wherein the connection conduit (41, 42, 43, 44) comprises:
a damper (42a, 43a) configured to regulate an inflow and outflow of the cooling fluid between individual cooling spaces (L1, L2, L3, L4) divided by the battery cell(s) (20) and the connection pipe (30),
optionally wherein the damper (42a, 43a) further comprises an adjustment member controlling or blocking the inlet of the connection conduit to respectively adjust or prevent a cooling fluid inside the connection pipe from flowing into the cooling space through the connection conduit.

5. The module of any one of claims 1 to 4, further comprising:
a porous moisture absorption member (21) bonded to a surface of the battery cell (20) that is, at least partially, in contact with the cooling fluid.

6. The module of claim 5, wherein the porous moisture absorption member (21) has one or more through-holes (21a),
preferably wherein the through-holes (21a) comprise three-dimensional void spaces having a spherical or polygonal shape and/or cross-section, and
further preferably wherein the through-holes (21a) comprise cylindrical pores, flask-shaped pores and/or open pores having a conical or V shaped pore structure.

7. The module of any one of claims 1 to 6, further comprising:
a condenser (70) that is coupled to a pipe (71) connected to an outside of the housing (10) so that gas is flowable to and from a first side and a second side of an upper space inside the housing (10).

8. An immersion cooling method comprising:
i) providing a housing (10) which includes a first end inlet (11) and a second end inlet (12) provided on opposite ends of the housing (10), and providing a connection pipe (30) that is arranged to be coupled below the housing (10);
ii) placing one or more battery cell(s) (20) in the housing (10);
iii) introducing a cooling fluid into the housing (10) through the first end inlet (11) and/or the second end inlet (12), so that a certain level of the cooling fluid inside the housing (10) is reached and/or maintained, and allowing the cooling fluid to flow from and into the housing (10) through the connection pipe (30);
wherein the battery cell(s) (20) is(are) at least partially immersed in the cooling fluid and arranged to form one or more cooling space(s) (L1, L2, L3, L4) between the battery cells (20), and
wherein the cooling fluid accommodated in the connection pipe (30) is allowed to be introduced into a heat exchanger (50) that is arranged to be coupled to the connection pipe (30).

9. The method of claim 8, wherein one or more connection conduit(s) (41,42,43,44) is(are) provided to connect the connection pipe (30) from a lower surface of the housing (10) with the one or more cooling space(s) (L1, L2, L3, L4), respectively,
wherein the flow of cooling fluid allows the cooling fluids to exchange heat with each other via the heat exchanger (50), and the cooling fluid is allowed to flow between the cooling space(s) (L1, L2, L3, L4) and the connection pipe (30).

10. The method of claim 9, wherein
a first connection conduit (41) is provided to connect the connection pipe (30) from a lower surface of the housing (10) on the first end inlet (11) side with a first cooling space (L1),
a second connection conduit (42) and a third connection conduit (43) are further provided that are individually coupled to the connection pipe (30) from the lower surface of the housing (10) for a second cooling space (L2) and a third cooling space (L3) created between the battery cells (20), respectively, and
a fourth connection conduit (44) is provided to connect the connection pipe (30) from the lower surface of the housing (10) with a fourth cooling space (L4),
preferably wherein a flow of the cooling fluid flowing in from the first end inlet (11) and the second end inlet (12) into the connection pipe (30) is respectively controlled by the first connection conduit (41) and the fourth connection conduit (44).

11. The method of any one of claims 8 to 10, wherein, when the temperature of the cooling fluid in one or more cooling space(s) (L2, L3) increases, the cooling fluid is discharged to the connection pipe (30) through the corresponding connection conduits (42, 43) connected to the respective cooling space(s) (L2, L3), and supplied toward the heat exchanger (50) by means of a corresponding one or more fluid pump(s) (61, 62), respectively, so that a relatively low temperature cooling fluid fraction from one or more other cooling space(s) (L1, L4) are allowed to be introduced into the heat exchanger (50) by means of the corresponding other fluid pump(s) (61, 62), respectively, to allow the cooling fluid fractions to exchange heat with each other through mixing in the heat exchanger (50).

12. The method of any one of claims 8 to 11, further comprising:
measuring, by a temperature sensor (50a), a temperature of the cooling fluid inside the heat exchanger (50), and
controlling, by a discharge pump (50b), an outlet (51) through which the cooling fluid can be discharged,
preferably wherein an amount of the cooling fluid exiting the outlet (51) is controlled based on temperature information provided by the temperature sensor (50a),
further preferably wherein the temperature sensor (50a), the discharge pump (50b), and the outlet (51) are arranged to be comprised in the heat exchanger (50).

13. The method of any one of claims 8 to 12, wherein by sensing a temperature of the cooling fluid in each of the one or more cooling spaces (L1, L2, L3, L4), the cooling fluid fraction with the highest temperature is discharged toward the heat exchanger (50), where the cooling fluid is mixed with the cooling fluid fraction of a relatively lower temperature, so that the mixed cooling fluid has a reduced temperature and is then reintroduced into one or more of the cooling spaces (L1, L2, L3, L4) through a circulation process.

14. The method of any one of claims 9 to 13, wherein a damper (42a, 43a) is provided that is arranged to be connected to an intersection of the connection pipe (30) and the connection conduit (42, 43) to regulate an amount and/or a direction of a flow of the cooling fluid by controlling an opening angle of an adjustment member that is configured to have the same shape as a cross-section of an inside of the connection conduit (42, 43),
preferably wherein the damper (42a, 43a) is configured to regulate a flow direction of the cooling fluid entering or leaving the heat exchanger (50) as the one or more fluid pump(s) (61, 62) operate, so that the cooling fluid can be selectively supplied to or discharged from each of the one or more cooling spaces (L1, L2, L3, L4).

15. Use of an immersion cooling module of any one of claims 1 to 7 for heat exchange of cooling fluid fractions by mixing cooling fluid fractions flowing in from opposite sides of a heat exchanger (50).
